(19)

Europäisches
Patentamt
European
Patent Office
Office européen
des brevets

(11)  **EP 2 472 848 A2**

(12)  **EUROPEAN PATENT APPLICATION**

(43) Date of publication:
04.07.2012 Bulletin 2012/27

(21) Application number: 11161613.2

(22) Date of filing: 08.04.2011

(51) Int Cl.:
*H04N 5/14* (2006.01)      *H04N 5/21* (2006.01)
*H04N 5/76* (2006.01)      *H04N 5/232* (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 04.01.2011 TW 100100157

(71) Applicant: **Aptos Technology Inc.**
**Park**
**Hu-Kou, Hsin-chu 303 (CN)**

(72) Inventor: **Hung, Chia-Chun**
**Hu-Kou Hsin-Chu 303 (TW)**

(74) Representative: **Reichert, Sabine**
**Reichert & Kollegen**
**Bismarckplatz 8**
**93047 Regensburg (DE)**

(54)  **Video playback apparatus and method**

(57)   A video playback apparatus (1) includes a user interface (11), an image processing module (12) and a playback module (13). The user interface allows a user to select an original playback mode or a compensated playback mode, and outputs a corresponding playback mode signal (PMS). The image processing module is for receiving a video signal (VS) and the playback mode signal and sending the video signal substantially unaltered or compensating the video signal before sending according to the playback mode signal. The playback module is for playing back the video signal from the image processing module. The aforementioned video playback apparatus provides the user different playback mode selections for the same video.

FIG.1

EP 2 472 848 A2

**Description**

**BACKGROUND OF THE INVENTION**

1. FIELD OF THE INVENTION

The present invention relates to a video playback apparatus and method, and more particularly to a video playback apparatus and method providing a user different playback mode selections.

2. DESCRIPTION OF THE PRIOR ART

The prior art video playback device can only faithfully present the video filmed. Therefore, when playing a video filmed by poor filming techniques or by a vehicle recording apparatus during driving on a bumpy road, the shake in the video tends to cause uncomfortable feelings of a viewer such as dizziness, weary eyes, etc. Unfortunately, when the video is processed to significantly reduce the video shake, it may no longer faithfully reflect the situation shot. For example, a video shot by a vehicle recording apparatus mounted on a mountain bike may not be able to reflect the excitements riding off roads if it is smoothened.
In summary, it is highly desirable to allow a user to play back a video in a way depending on his/her need.

**SUMMARY OF THE INVENTION**

The present invention is directed to a video playback apparatus and method which provide two playback modes selectable by a user. Depending on the user's selection, the present invention may present the shot video faithfully or present a smoother video after it is compensated.
According to an embodiment, the video playback apparatus includes a user interface, an image processing module and a playback module. The user interface allows a user to select an original playback mode or a compensated playback mode, and outputs a corresponding playback mode signal. The image processing module is electrically connected with the user interface for receiving a video signal and the playback mode signal, and sending the video signal substantially unaltered or compensating the video before sending according to the playback mode signal. The playback module is electrically connected with the image processing module for playing the video signal from the image processing module.
According to another embodiment, the video playback method includes: selecting an original playback mode or a compensated playback mode; based on the selected original playback mode or compensated playback mode, sending a video signal substantially unaltered or compensating the video signal before sending; and playing back the non-compensated or compensated video signal.
The objective, technologies, features and advantages of the present invention will become more apparent from the following description in conjunction with the accompanying drawings, wherein certain embodiments of the present invention are set forth by way of illustration and examples.

**BRIEF DESCRIPTION OF THE DRAWINGS**

FIG. 1 is a block diagram illustrating the video playback apparatus according to an embodiment of the present invention;
FIG. 2 is a block diagram illustrating the video playback apparatus according to another embodiment of the present invention;
FIG. 3 is a block diagram illustrating the video playback apparatus according to still another embodiment of the present invention;
FIG. 4 is a flow chart illustrating the video playback method according to an embodiment of the present invention; and
FIG. 5a-5c are schematic diagrams illustrating the compensation method for the shake of the video.

**DESCRIPTION OF THE PREFERRED EMBODIMENT**

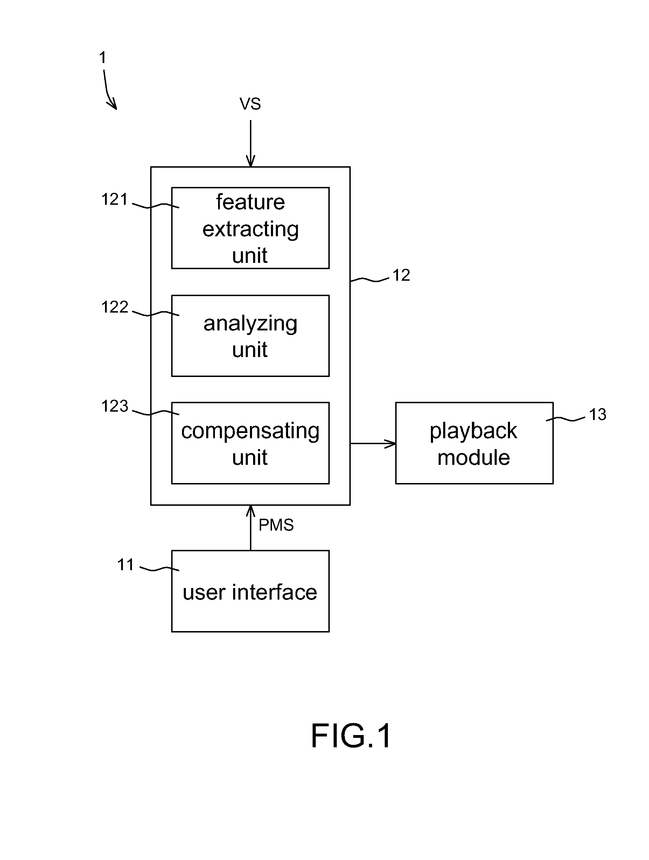

Referring to FIG. 1, the video playback apparatus 1 according to an embodiment includes a user interface 11, an image processing module 12 and a playback module 13. The user interface 11 allows a user to select an original playback mode or a compensated playback mode, and outputs a corresponding playback mode signal PMS. For example, the user interface 11 may be a graphical user interface implemented by software or a physical button.
The image processing module 12 is electrically connected with the user interface 11 so as to receive the playback mode signal PMS from the user interface 11. Besides, the image processing module 12 also receives a video signal VS. If the user selects the original playback mode to play the video, i.e. the mode that the video shot would be presented faithfully, the image processing module 12 then directly sends the video signal VS according to the playback mode signal PMS corresponding to the original playback mode. In other words, the image processing module 12 may not have done any processing on the video signal VS. If the user selects the compensated playback mode to play the video, the image processing module 12 then compensates the video signal VS according to the playback mode signal PMS corresponding to the compensated playback mode. The playback module 13 is electrically connected with the image processing module 12 for playing the video signal output from the image processing module 12. It is noted that the image processing module 12 and the playback module 13 may be implemented by software, hardware or a combination thereof.

According to an embodiment, the image processing module 12 includes a feature extracting unit 121, an analyzing unit 122 and a compensating unit 123. The feature extracting unit 121 may receive the video signal VS, and extract at least a feature in a plurality of frames during a specific period in the video signal VS. The feature extracting unit 121 may use a feature block comparison method to extract the feature in adjacent frames. For example, the feature extracting unit 121 may use the following equation to calculate the similarity of the blocks to obtain the feature blocks.

$$C_T(m, n) = \frac{\sum_x \sum_y (T(x, y) - \mu_T)(R(x-m, y-n) - \mu_R)}{\sqrt{\sum_x \sum_y (T(x, y) - \mu_T)^2} \sqrt{\sum_x \sum_y (R(x-m, y-n) - \mu_R)^2}}$$

where T(x, y) and R(x-m, y-n) respectively denote the gray scale pixel values at position (x, y) in the next frame and at the position in the present frame translated by (m, n) from the position in the next frame; $\mu_T$ and $\mu_R$ respectively denote the gray scale average values of the blocks they respectively locate at. Correlation coefficient is a statistical measure assessing the direction and strength of the linear correlation between two random variables. A correlation coefficient lies between +1 and -1, i.e. $C_T(m, n) \in$ [-1,+1], wherein +1 denotes the maximum positive correlation, -1 the maximum negative correlation and 0 no linear correlation. Hence, two blocks may be defined to be similar when $C_T(m, n) > 0$, whereby feature blocks may be extracted.

Based on the extracted feature by the feature extracting unit 121, the analyzing unit 122 may calculate a translational or rotational deviation of the feature between the next frame and the present frame. The compensating unit 123 may then compensate for the deviation of the feature in the next frame based on the calculated deviation by the analyzing unit 122.

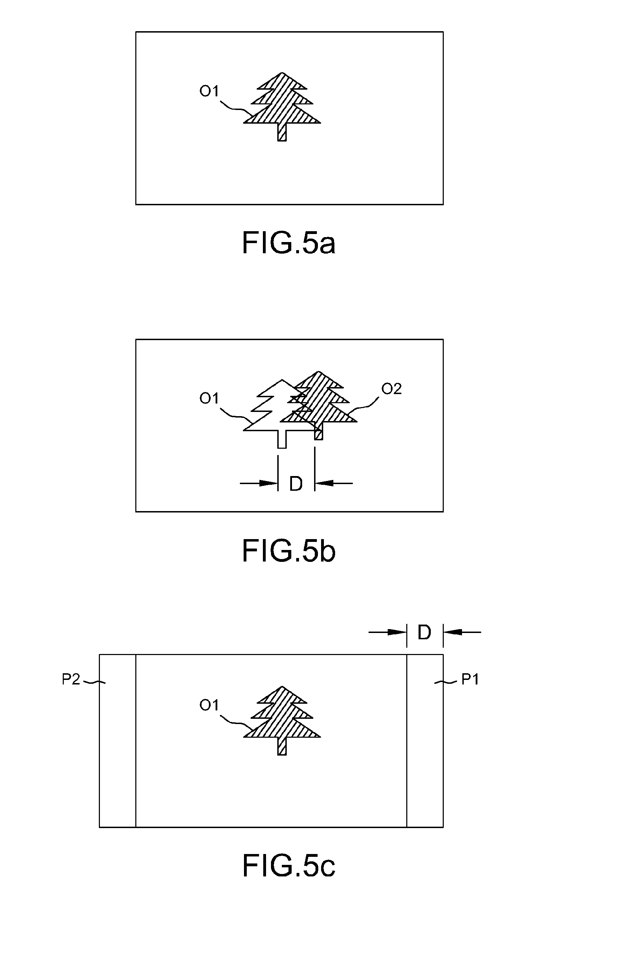

Referring to FIG. 5a to FIG. 5c, the feature object in the video is at position 01 in the present frame as shown in FIG. 5a. In the next frame, because of shaking during shooting of the video, the feature object deviates to the right by a distance D, and is therefore located at position 02 in the next frame as shown in FIG. 5b. When the video is played continuously, the feature object would appear shaking in the video, causing the eyes of a viewer uncomfortable. In order to smooth out the video, the image processing module 12 would use the feature in the present frame as a basis for compensation of the next frame so as to reduce the shakiness of the video.

Based on the feature extracted by the feature extracting unit 121 and the deviation of the feature of the next frame calculated by the analyzing unit 122, the compensating unit 123 may achieve compensating the next frame by increasing or decreasing the border pixels of the next frame. For instance, referring to FIG. 5c, the compensating unit 123 may increase border pixels P1 on the right side of the next frame, and the width of the increase is equal to the deviation, i.e. the distance D, thereby compensating the irregular deviation caused by shaking during shooting of the video. Preferably, the compensating unit 123 cuts from the left side of the frame a width D of border pixels P2. In this way, the size of the compensated next frame would be the same as the present frame. Because when playing a video, a viewer's focus is primarily on the central area, it is less likely that the viewer would notice the removed border pixels. It is noted that the width of the border pixels P1, P2 adjusted may be equal to the distance D of deviation to fully compensate for the deviation from shooting, or less than the distance D of the deviation to lower the impact of shaking during playback. According to an embodiment, the deviation caused by shooting may include rotation of the object. With respect to the rotation of the object, the theory of image matrix rotation may be applied for compensation of the compensating unit 123.

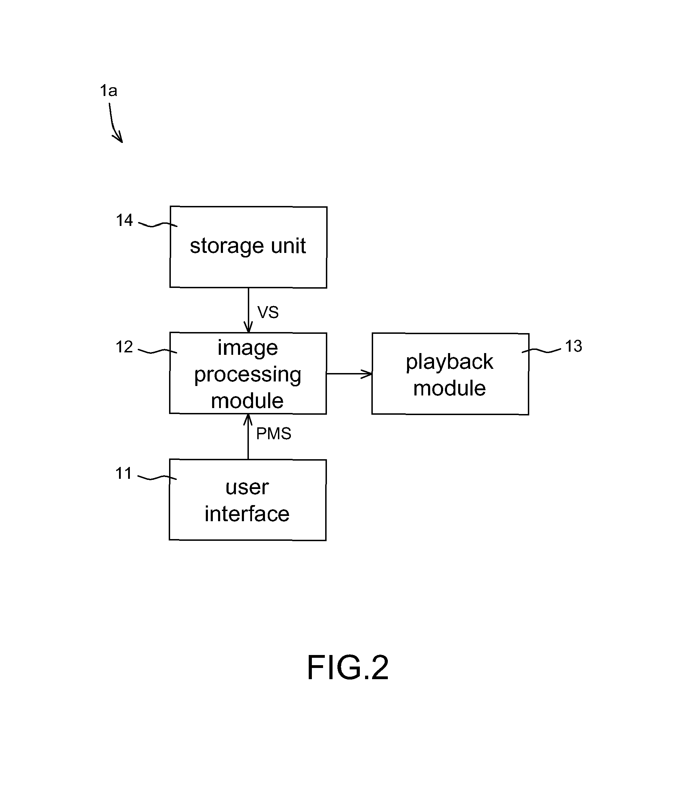

Referring to FIG. 2, compared to the embodiment shown in FIG. 1, the video playback apparatus 1a according to another embodiment further includes a storage unit 14 for storing the video signal VS. For example, the storage unit 14 may be a storage medium that can store the video signal such as a hard disk, memory card, flash memory, and optical disc. The image processing module 12 may retrieve the video signal VS from the storage unit 14 and sends the video signal substantially unaltered to the playback module 13 or compensates the video signal VS and then sends the compensated video signal VS to the playback module 13 depending on the playback mode selected by the user.

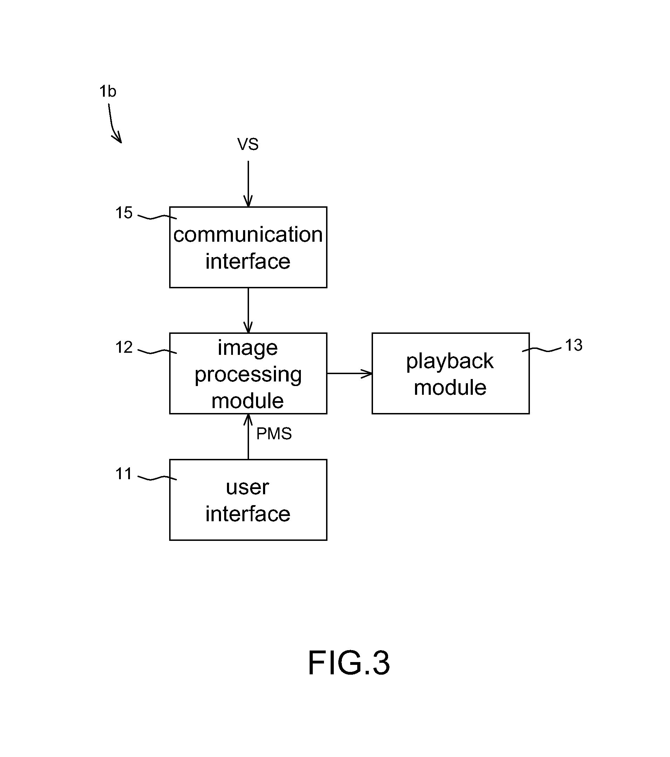

Referring to FIG. 3, compared to the embodiment shown in FIG. 1, the video playback apparatus 1 b according to yet another embodiment further includes a communication interface 15 for receiving the video signal VS from an external electronic device. For example, the communication interface 15 may be a USB (Universal Serial Bus) interface, a network interface and so on. Through the communication interface 15, the video playback apparatus 15 according to the present embodiment may playback the video stored in an external storage medium, a camcorder, a remote computer or server.

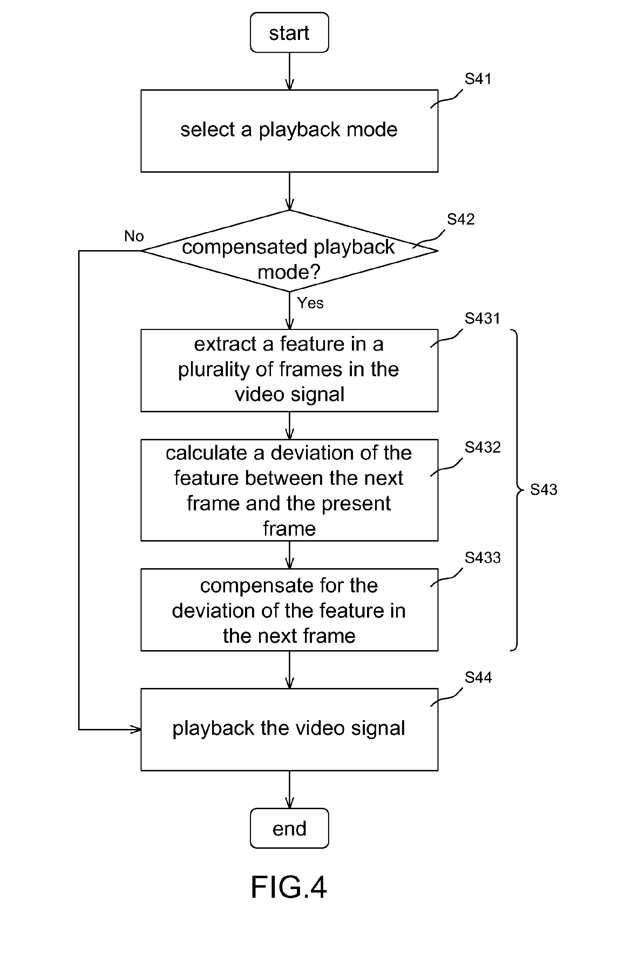

Referring to FIG. 4, the video playback method according to an embodiment includes the following steps. First, a user selects the playback mode for playing the video (S41), such as an original playback mode or a compensated playback mode. Next, the playback mode selected by the user is determined (S42). If the original playback mode is selected, then a video signal is played back directly (S44). If the compensated playback mode is selected, then a compensating step S43 is executed. The compensating step S43 includes: extracting at least a feature from a plurality of frames during a specific period in the video signal (S431); calculating a translational or rotational deviation of the feature between the next frame and the present frame (S432); and compensating for the deviation of the next frame. (S433) Lastly, the compensated video signal is played back. The details of the foregoing steps have been provided above and are omitted here.

In summary, the video playback apparatus and method of the present invention provides two playback modes for a user to select in accordance with his/her need. If the user desires the video to be faithfully presented, i.e. the original playback mode is selected, the video faithful to the actual one shot would be presented. If the user desires the shake in the video to be reduced so as to lower the discomfort from watching the shaky video, the user may select the compensated playback mode and the video shot would be compensated and appear smoother.

While the invention is susceptible to various modifications and alternative forms, a specific example thereof has been shown in the drawings and is herein described in detail. It should be understood, however, that the invention is not to be limited to the particular form disclosed, but to the contrary, the invention is to cover all modifications, equivalents, and alternatives falling within the spirit and scope of the appended claims.

**Claims**

1.   A video playback apparatus (1) **characterized by**:

   a user interface (11) allowing a user to select an original playback mode or a compensated playback mode, and outputting a corresponding playback mode signal (PMS);
   an image processing module (12) electrically connected with the user interface (11) for receiving a video signal (VS) and the playback mode signal (PMS), and sending the video signal (VS) substantially unaltered or compensating the video signal (VS) before sending according to the playback mode signal (PMS); and
   a playback module (13) electrically connected with the image processing module (12) for playing the video signal (VS) from the image processing module (12).

2.   The video playback apparatus (1) according to claim 1, wherein the image processing module (12) comprises:

   a feature extracting unit (121) receiving the video signal (VS) and extracting at least a feature in a plurality of frames during a specific period in the video signal (VS);
   an analyzing unit (122) for calculating a translational or rotational deviation of the feature between the next frame and the present frame; and
   a compensating unit (123) for compensating for the deviation of the feature in the next frame.

3.   The video playback apparatus (1) according to claim 2, wherein the feature extracting unit (121) extracts the feature by a feature block comparison method.

4.   The video playback apparatus (1) according to claim 2, wherein the compensating unit (123) adjusts border pixels of the next frame to compensate for the deviation of the feature.

5.   The video playback apparatus (1) according to claim 1, wherein the user interface (11) comprises a graphical user interface or a button.

6.   The video playback apparatus (1 a) according to claim 1, further comprising a storage unit (14) electrically connected with the image processing unit (12) for storing the video signal (VS).

7. The video playback apparatus (1 b) according to claim 1, further comprising a communication interface (15) electrically connected with the image processing module (12) for receiving the external video signal (VS).

1

VS

| feature extracting unit | 121 |
| analyzing unit | 122 |
| compensating unit | 123 |

12

playback module — 13

PMS

user interface — 11

# FIG.1

1a

14 — storage unit

VS

12 — image processing module → playback module — 13

PMS

11 — user interface

# FIG.2

1b

VS

15 — communication interface

12 — image processing module → playback module — 13

PMS

11 — user interface

# FIG.3

start

select a playback mode — S41

compensated playback mode? — S42

No

Yes

extract a feature in a plurality of frames in the video signal — S431

calculate a deviation of the feature between the next frame and the present frame — S432

compensate for the deviation of the feature in the next frame — S433

S43

playback the video signal — S44

end

FIG.4

FIG.5a

FIG.5b

FIG.5c